Europäisches Patentamt

European Patent Office

Office européen des brevets

(19)

(11) Veröffentlichungsnummer: **0 471 889 B1**

(12) **EUROPÄISCHE PATENTSCHRIFT**

(45) Veröffentlichungstag der Patentschrift: **17.08.94**

(51) Int. Cl.5: **F16B 7/04**

(21) Anmeldenummer: **90124167.9**

(22) Anmeldetag: **14.12.90**

(54) **Vorrichtung zum lösbaren Verbinden zweier Profile.**

(30) Priorität: **24.08.90 DE 4026737**

(43) Veröffentlichungstag der Anmeldung:
**26.02.92 Patentblatt 92/09**

(45) Bekanntmachung des Hinweises auf die
Patenterteilung:
**17.08.94 Patentblatt 94/33**

(84) Benannte Vertragsstaaten:
**CH DE FR IT LI SE**

(56) Entgegenhaltungen:
**DE-U- 8 325 048**
**DE-U- 8 703 105**
**FR-A- 2 122 006**

(73) Patentinhaber: **Montech AG**
**Gewerbestrasse 12**
**CH-4552 Derendingen (CH)**

(72) Erfinder: **Trenner, Albrecht**
**Kronmattstrasse 15**
**CH-4513 Langendorf (CH)**

(74) Vertreter: **Weiss, Peter, Dr. rer.nat.**
**Dr. Peter Weiss & Partner**
**Postfach 12 50**
**D-78229 Engen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

**Beschreibung**

Die Erfindung betrifft eine Vorrichtung zum lösbaren Verbinden zweier Profile, Schienenelemente od. dgl. aus zumindest einem Profilstreifen mit zumindest einer Nut.

Sollen zwei Profile, beispielsweise stranggepresste Profile, Schienenelemente od. dgl., lösbar miteinander verbunden werden, so wird in der Regel hierfür eine Platte als Kupplung verwendet. Eine solche Platte wird zuerst an dem einen Profil befestigt, wobei durch beispielsweise seitlich angeformte Laschen, dieses Profil übergriffen wird. Die Laschen besitzen Bohrungen für Schraubverbindungen zu dem anderen Profil. Deshalb weisen solche Kupplungsplatten genau genormte Bohrungen mit vorgeschriebenen Abständen auf.

Werden diese Abstände nicht eingehalten, treten beim Montieren Probleme auf.

Oft ist es aber unerwünscht, hinderlich oder aus technischen Gründen nicht tragbar, wenn Laschen seitlich ein Profil überragen. Häufig werden deshalb am Profil selbst Kantenfasungen vorgenommen, so dass eventuelle Befestigungsmittel zumindest teilweise hinter die Anfasung eingesetzt werden können. Dieser Bereich ist wiederum vom Schraubwerkzeug nur sehr schwierig und mangelhaft eingreifbar.

Als bessere Lösung für die lösbare Verbindung von zwei Profilen, insbesondere auch für die Verbindung von Strangpressprofilen hat sich eine Verbindung mit einer Art Befestigungspratze gemäss dem deutschen Gebrauchsmuster G 87 03 105.1 erwiesen. Solche Befestigungspratzen bestehen bevorzugt aus Profilstreifen, welche zwischen den zu verbindenden Profilen angeordnet und mit Gewindebolzen, Schraubenbolzen od. dgl. miteinander gekoppelt sind.

Dem Profilstreifen selbst sind dabei Längsnuten, Einschnitte od. dgl. eingeformt, welche in Gebrauchslage in eine entsprechende Nut in den Profilen eingreifen.

Die Schraubenbolzen durchsetzen die Profilstreifen zwischen den beiden Profilen und sind deshalb leicht von der Seite her zugänglich. Der Nachteil solcher Verbindungselemente liegt jedoch darin, dass die Längsnuten, Einschnitte od. dgl. immer ebenflächig ausgebildet sind und somit die Einsatzkeile der Profile diesen Nutenwänden ganzflächig anliegen.

Da jedoch insbesondere bei zu verbindenden Strangpressprofilen Massunterschiede auftreten, ist es möglich, dass die Befestigungspratzen im Bereich solcher Massunterschiede beim Verkeilen der zu verbindenden Profile verkanten und damit eine gewünschte sichere Festlegung verhindern. Ein sich späteres gegeneinander Verschieben der beiden verbundenen Profile in Gebrauchslage ist nicht ausgeschlossen, was jedoch insbesondere bei der Verbindung von beispielsweise einer Trägereinheit mit einer Arbeitsgerätschaft folgenschwere Konsequenzen nach sich ziehen kann.

Der Erfinder hat sich zur Aufgabe gestellt, eine Vorrichtung der oben genannten Art zu schaffen, welche die Vorteile in der Handhabung der beschriebenen Befestigungspratzen besitzt und ein sicheres Festlegen auch bei Massunterschieden von Profilen ermöglicht.

Zur Lösung dieser Aufgabe führt, dass die Nut eine äussere Nutenwand mit konvexer Wölbung und eine innere Nutenwand besitzt, wobei letztere in einem Winkel geneigt zu einer Mittelachse des Profilstreifens verläuft. Denkbar ist die Anordnung nur eines Profilstreifens mit nur einer erfindungsgemässen Nut. Ferner kann eine erfindungsgemässe Nut ein- oder beidseitig einer Mittelachse vorgesehen sein.

In einem bevorzugten Ausführungsbeispiel besteht dabei eine erfindungsgemässe Vorrichtung zum lösbaren Verbinden zweier Profile aus zwei, einem oberen und einem unteren, Profilstreifen mit entsprechenden Nuten, welche in Gebrauchslage durch Schraubenbolzen od. dgl. miteinander verbunden sind. Beide Profilstreifen weisen im Querschnitt etwa dieselbe rechteckige Form auf.

Nach aussen bilden die Profilstreifen einen etwa eben verlaufenden Rücken aus, an den sich seitlich Flanken anschliessen. Zwischen Flanken und Rücken können scharfe Kanten, Anfasungen oder Abrundungen vorgesehen sein. Die Unterseite der Profilstreifen ist von zwei etwa parallel zu einer Mittelachse verlaufenden Nuten besetzt, welche eine äussere und eine innere Nutenwand aufweisen. Der von der äusseren und der inneren Nutenwand gebildete Nutengrund ist abgerundet und bildet in etwa eine Kehle aus.

Ein Haupterfindungsgedanke ist dabei, dass die äussere Nutenwand nicht ebenflächig, sondern konvex gewölbt ist. Die innere Nutenwand verläuft zwar ebenflächig, sie besitzt allerdings eine leichte Neigung zur Mitte der Unterseite des Profilstreifens. Die äussere Nutenwand bildet zusammen mit der Flanke des Profilstreifens einen keilförmigen Einsatz aus. Ebenso ist durch die oben genannte leichte Neigung der inneren Nutenwand zur Mitte der Unterseite des Profilstreifens hin ein etwa keilförmiger Einsatz ausgebildet. Die Spitze des von der äusseren Nutenwand und der Flanke gebildeten keilförmigen Einsatzes ist abgerundet.

Einer derartig ausgeformten Nut wird in Gebrauchslage ein Profilteil, ein Schienenelement od. dgl. zugeordnet, wobei das Profilteil, das Schienenelement od. dgl. in etwa schwalbenschwanz- bzw. trapezförmig ausgebildet ist und zumindest einseitig eine Steigfläche aufweist. Um zwei so geformte Profilteile, Schienenelemente od. dgl. zu verbinden, hintergreifen die keilförmigen Einsätze sowohl des oberen Profilstreifens als auch des unteren Profilstreifens die oben genannten

Steigflächen der Profilteile, der Schienenelemente od. dgl., so dass Einsatzkeile, welche durch die Steigflächen und den jeweiligen Stirnflächen der zu verbindenden Profilteile, Schienenelemente od. dgl. gebildet werden, in die Nuten der Profilstreifen eingreifen.

Zur Festlegung durchgreift ein Befestigungselement, wie beispielsweise ein Gewindebolzen od. dgl., den oberen und unteren Profilstreifen, wobei er einen Zwischenraum zwischen den Stirnflächen der zu verbindenden Profilteile, Schienenelemente od. dgl. durchsetzt. Der Zwischenraum wird von den beiden Keilen zwischen den Nuten des oberen und unteren Profilstreifens gebildet.

Während der obere Profilstreifen bevorzugt eine Stufenbohrung zur Aufnahme eines Gewindebolzens mit Gewindekopf aufweist, ist dem unteren Profilstreifen eine Gewindebohrung für die Aufnahme des Gewindeteils des entsprechenden die beiden Profilstreifen verbindenden Gewindebolzens, Schraubenbolzens od. dgl. Befestigungselementes eingebracht. Zur besseren Führung ist der Gewindebohrung des unteren Profilstreifens für die Aufnahme des Gewindeteils des Gewindebolzens, Schraubenbolzens od. dgl. ein sich öffnender Führungskanal zugeordnet.

Es ist aber auch durchaus denkbar, dass zur Verbindung von Profilteilen, Schienenelementen od. dgl. miteinander oder untereinander nur Profilstreifen mit den entsprechenden Stufenbohrungen verwendet werden. Statt der Gewindebohrung wird dann eine Gewindemutter in den Profilstreifen eingelegt.

Eine derartige Anordnung bedeutet vor allem in der Herstellung erhebliche Kosteneinsparung.

Zur endgültigen Festlegung der Profilstreifen, Schienenelemente od. dgl. werden der obere und untere Profilstreifen durch entsprechendes Eindrehen der Gewindebolzen, -schrauben od. dgl. Befestigungselemente gegeneinander gezogen, wodurch sich die von den Steigflächen und den Stirnflächen gebildeten Einsatzkeile in den Nuten der Profilstreifen verkeilen. Dabei entstehen zwischen den Steigflächen und der äusseren konvex gewölbten Nutenwand einerseits und den Stirnflächen und der inneren geneigten Nutenwand andererseits kleinflächige Kontakte. Durch diese Art der Kontaktflächen in Verbindung mit dem als Kehle ausgebildeten Nutengrund und den abgerundeten Spitzen der keilförmigen Einsätze ist beim Festlegungsvorgang ein Verkanten ausgeschlossen. Die einander aufliegenden Flächen gleiten leicht übereinander, bis die endgültige Festlegung erfolgt ist. Ein anschliessendes Verrutschen oder Verschieben gegeneinander ohne vorheriges Lösen der Gewindebolzen, Schraubenbolzen od. dgl. Befestigungselement ist ausgeschlossen. Andererseits lassen sich jedoch durch leichtes Lösen der Gewindebolzen, Schraubenbolzen od. dgl. die Verbindungselemente wesentlich besser entlang von Profilen bzw. Schienenelementen od. dgl. verschieben, ebenso wie die verbundenen Profilstreifen, Schienenelemente od. dgl. untereinander.

Durch die oben beschriebene Ausformung der Nuten in den Profilstreifen werden etwaige Massunterschiede in den zu verbindenden Profilen ausgeglichen, wodurch eine endgültige und gewünschte sichere Festlegung erreicht wird. Dadurch, dass die Befestigungselemente, wie beispielsweise Gewindebolzen, Schraubenbolzen od. dgl., zwischen den zu befestigenden Profilstreifen, Schienenelementen od. dgl. verlaufen, sind sie allseits jederzeit gut mit einem entsprechenden Schraubwerkzeug erreichbar.

Selbstverständlich ist es auch denkbar, dass Profilstreifen mit Nuten der oben beschriebenen Art nicht nur linear, sondern auch beispielsweise torbogenähnlich ausgeformt sind, beispielsweise zur Festlegung von zwei Scheiben, Drehkränzen, Dreheinheiten od. dgl., wobei diese Scheiben, Drehkränze od. dgl. randseitig entsprechend ausgeformt sind.

Ebenso ist denkbar, dass die Profilstreifen beispielsweise einseitig linear, anderseitig torbogenähnlich ausgeformt sind, jeweils mit Nuten der oben beschriebenen Art. Mit derartigen Profilstreifen sind z.B. Scheiben, Drehkränze, Dreheinheiten od. dgl. an linear verlaufenden Profilen, Schienenelementen od. dgl. festlegbar.

Solche Befestigungselemente können beispielsweise auch dazu dienen, Profile mit dachförmigen Nuten oder Nuten, die rechteckförmig sind, miteinander zu verbinden.

Für die Anwendung solcher erfindungsgemässer Verbindungselemente gibt es unzählige Anwendungsbeispiele, so dass hier keine Beschränkung vorgenommen sein soll.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Figur 1 eine perspektivische Ansicht eines teilweise gebrochenen Profils und eines Schienenelements, welche durch eine erfindungsgemässe Vorrichtung miteinander verbunden sind;

Figur 2 einen Querschnitt durch die Vorrichtung in Gebrauchslage entlang Linie II-II in Figur 1;

Figur 3 eine Draufsicht auf einen Profilstreifen des Verbindungselementes gemäss Figur 1;

Figur 4 eine Draufsicht auf einen oberen Profilstreifen;

Figur 5 einen Querschnitt durch den Profilstreifen entlang Linie V-V in Figur 4;

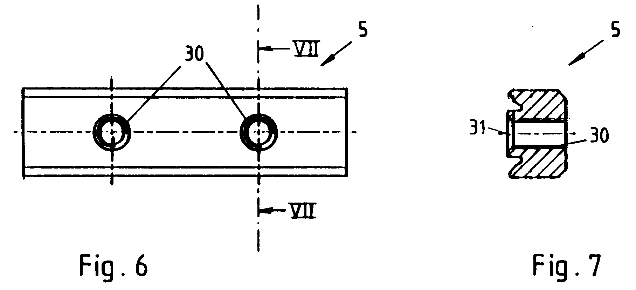

Figur 6 eine Draufsicht auf einen unteren Profilstreifen;

Figur 7 einen Querschnitt durch den unteren Profilstreifen entlang Linie VII-VII in Figur 6.

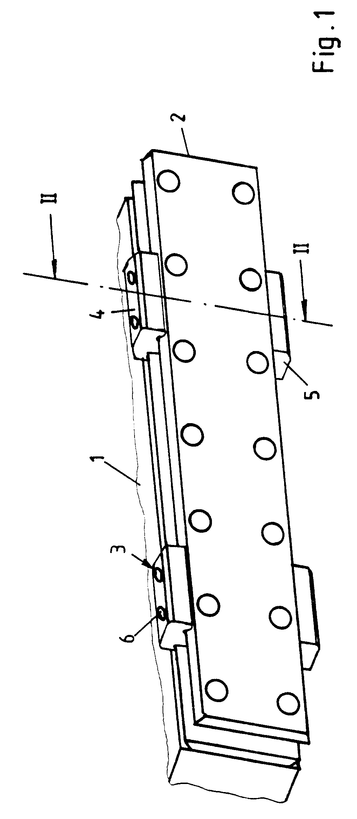

In Figur 1 sind als Beispiele von zwei zu verbindenden Elementen ein Profil 1 und ein Schienenelement 2 gezeigt, welche über zwei erfindungsgemässe Verbindungselemente 3 miteinander verbunden sind.

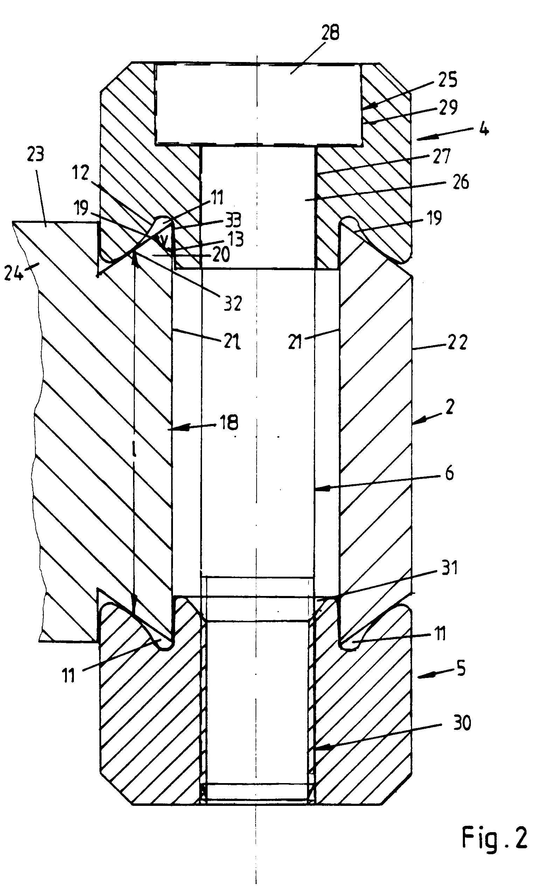

Ein Verbindungselement 3 besteht dabei, wie insbesondere in Figur 2 sichtbar, aus einem oberen Profilstreifen 4 und einem unteren Profilstreifen 5. Zur gegenseitigen Festlegung des Profils 1 und des Schienenelementen 2 sind die beiden Profilstreifen 4 und 5 durch Gewindebolzen 6, durch Schraubenbolzen od. dgl. miteinander verbunden.

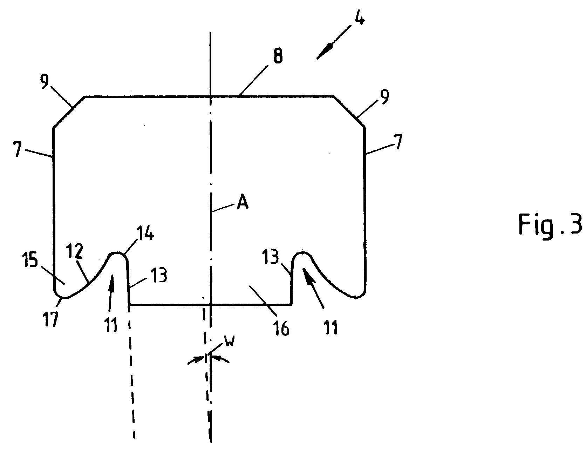

Im Querschnitt weisen die beiden Profilstreifen 4 und 5 jeweils die gleiche Form auf. Eine solche Form ist, wie auch in Figur 3 dargestellt, etwa rechteckig.

Nach aussen bildet der Profilstreifen 4 einen etwa eben verlaufenden Rücken 8, an den sich seitlich über Anfasungen 9 Flanken 7 anschliessen. Diese Flanken 7 verlaufen etwa parallel zueinander. Die Unterseite des Profilstreifens 4 ist von zwei etwa parallel zu einer Mittelachse A verlaufenden Nuten 11 besetzt, welche eine äussere Nutenwand 12 und eine innere Nutenwand 13 aufweisen. Der die äussere Nutenwand 12 und die innere Nutenwand 13 verbindende Nutengrund 14 ist gerundet ausgebildet.

Die äussere Nutenwand 12 ist erfindungsgemäss konvex gewölbt, während die innere Nutenwand 13 gerade verläuft, allerdings eine Neigung um einen Winkel w zu der Mittelachse A des Profilstreifens 4 hin besitzt. Die äussere Nutenwand 12 bildet mit der Flanke 7 einen keilförmigen Einsatz 15 aus. Desgleichen ist ein keilförmiger Einsatz 16 zwischen zwei sich gegenüberliegenden inneren Nutenwänden 13 zu erkennen. Auch eine Spitze 17 des keilförmigen Einsatzes 15 ist gerundet ausgebildet.

Dieser so geformten Nut 11 wird in Gebrauchslage ein Profilteil 18 bzw. das Schienenelement 2 zugeordnet. Querschnittlich gesehen ist sowohl das Profilteil 18 wie auch das Schienenelement 2 schwalbenschwanz- bzw. trapezförmig ausgebildet, wobei zumindest einseitig eine Steigfläche 19 vorgesehen ist. In einem spitzen Winkel v zu dieser Steigfläche 19 verläuft eine Stirnfläche 21 des Profilteils 18 bzw. Schienenelementes 2, wobei Steigfläche 19 und ein Teil der Stirnfläche 21 zusammen einen Einsatzkeil 20 ausbilden. Während beim Schienenelement 2 gegenüber der Stirnfläche 21 eine Aussenfläche 22 an die Steigfläche 19 anschliesst, ist der Profilteil 18 Teil eines Gesamtprofils 1, wobei im vorliegenden Ausführungsbeispiel ein weiterer Profilteil 23 mit der Steigfläche 19 eine Keilnut 24 ausbildet.

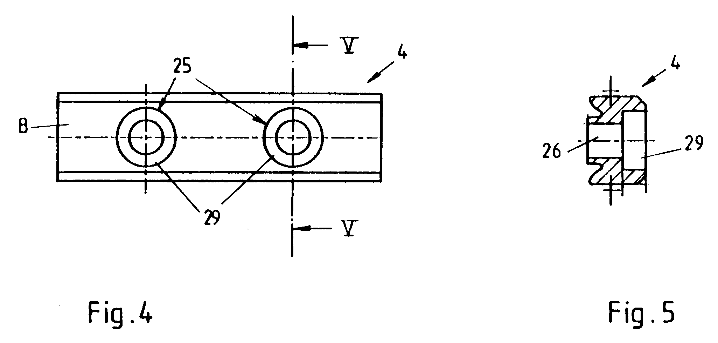

Gemäss Figur 2 bzw. den Figuren 4 und 5 besitzt der obere Profilstreifen 4 eine Stufenbohrung 25 zur Aufnahme des Gewindebolzens 6. Dabei durchgreift der Gewindebolzen 6 mit seinem Schaft 26 einen Bohrungsteil 27 geringeren Durchmessers, während ein Bolzenkopf 28 von einem Senkloch 29 der Stufenbohrung 25 aufgenommen wird.

Der untere Profilstreifen 5 ist querschnittlich bis auf eine Gewindebohrung (30) gleich ausgeführt, wie der obere Profilstreifen 4. Auch hier sind in eine Fläche entsprechende Nuten 11 eingeformt. Allerdings wird der Profilstreifen 5 von der Gewindebohrung 30 zylindrisch durchsetzt, wobei sie sich zum oberen Profilstreifen 4 hin durch einen Führungskanal 31 für den Gewindebolzen 6 konisch öffnet.

In Gebrauchslage greifen die Einsatzkeile 20 des Profilteils 18 bzw. Schienenelementes 2 in die entsprechenden Nuten 11 des oberen und unteren Profilstreifens 4 bzw. 5 ein. Durch ein Drehen des Schraubenbolzens 6 werden die beiden Profilstreifen 4 bzw. 5 zueinander gezogen, wodurch sich die Einsatzkeile 20 in den Nuten 11 verkeilen. Dabei entstehen Kontaktflächen 32 zwischen Steigfläche 19 und äusserer Nutenwand 12 und Kontaktflächen 33 zwischen Stirnflächen 21 und innerer Nutenwand 13. Durch die konvexe Wölbung der äusseren Nutenwand 12 und die leichte Neigung um den Winkel w der inneren Nutenwand 13 werden eventuelle Unterschiede der mittleren Länge 1 von Profilteil 18 und Schienenelement 2 ausgeglichen. Mit diesen Unterschieden in der Länge 1 muss selbst bei stranggepressten Profilen 1 bzw. Schienenelementen 2 immer gerechnet werden.

Ein Verkanten der Einsatzkeile 20 in den Nuten 11 ist ausgeschlossen, da die äussere und innere Nutenwand 12 bzw. 13 und die Steigfläche 19 bzw. die Stirnfläche 21 nicht gesamtflächig aneinanderliegen, sondern nur Kontaktflächen 32 bzw. 33 besitzen. Hierdurch lassen sich auch die Verbindungselemente 3 wesentlich leichter und besser entlang von Profilen 1 bzw. Schienenelementen 2 verschieben, wobei die Gewindebolzen 6 nur geringfügig gelöst werden müssen. Bei einer gesamtflächigen Anlage von Einsatzkeilen 20 in der Nut 11 kann es auch zu einem Einschneiden von Spitze 17 des keilförmigen Einsatzes 15 bzw. von der Spitze des Einsatzkeiles 20 kommen. Dies wird durch die erfindungsgemässe Ausformung der Nut 11 ebenfalls vermieden.

POSITIONSZAHLENLISTE

| | | | | | |
|---|---|---|---|---|---|
| 1 | Profil | 34 | | A | Mittelachse |
| 2 | Schienenelement | 35 | | w | Winkel |
| 3 | Verbindungselement | 36 | | v | spitzer Winkel |
| 4 | Profilstreifen oben | 37 | | l | mittlere Länge |
| 5 | Profilstreifen unten | 38 | | | |
| 6 | Gewindebolzen | 39 | | | |
| 7 | Flanke | 40 | | | |
| 8 | Rücken | 41 | | | |
| 9 | Anfasung | 42 | | | |
| 10 | | 43 | | | |
| 11 | Nut | 44 | | | |
| 12 | äussere Nutenwand | 45 | | | |
| 13 | innere Nutenwand | 46 | | | |
| 14 | Nutengrund | 47 | | | |
| 15 | keilförm. Einsatz | 48 | | | |
| 16 | keilförm. Einsatz | 49 | | | |
| 17 | Spitze | 50 | | | |
| 18 | Profilteil | 51 | | | |
| 19 | Steigfläche | 52 | | | |
| 20 | Einsatzkeil | 53 | | | |
| 21 | Stirnfläche | 54 | | | |
| 22 | Aussenfläche | 55 | | | |
| 23 | Profilteil | 56 | | | |
| 24 | Keilnut | 57 | | | |
| 25 | Stufenbohrung | 58 | | | |
| 26 | Schaft | 59 | | | |
| 27 | Bohrungsteil | 60 | | | |
| 28 | Bolzenkopf | 61 | | | |
| 29 | Senkloch | 62 | | | |
| 30 | Gewindebohrung | 63 | | | |
| 31 | Führungskanal | 64 | | | |
| 32 | Kontaktfläche | 65 | | | |
| 33 | Kontaktfläche | 66 | | | |

**Patentansprüche**

1. Vorrichtung zum lösbaren Verbinden zweier Profile (18), Schienenelemente (2) od. dgl. aus zumindest einem Profilstreifen (4, 5) mit zumindest einer Nut (11),
dadurch gekennzeichnet,
dass die Nut (11) eine äussere Nutenwand (12) mit konvexer Wölbung und eine innere Nutenwand (13)

5

besitzt, wobei letztere in einem Winkel (w) geneigt zu einer Mittelachse (A) des Profilstreifens (4, 5) verläuft.

2. Vorrichtung nach Anspruch 1, dadurch gekennzeichnet, dass äussere und innere Nutenwand (12,13) über einen abgerundeten Nutengrund (14) miteinander verbunden sind.

3. Vorrichtung nach Anspruch 1 oder 2, dadurch gekennzeichnet, dass die äussere Nutenwand (12) mit einer Flanke (7) des Profilstreifens (4,5) einen keilförmigen Einsatz (15) ausbildet, dessen Spitze (17) abgerundet ist.

4. Vorrichtung nach einem der Ansprüche 1 bis 3, dadurch gekennzeichnet, dass zwei Profilstreifen (4 und 5) über Gewindebolzen (6) miteinander verbunden sind, deren Nuten (11) sich gegenüberliegen.

5. Vorrichtung nach Anspruch 4, dadurch gekennzeichnet, dass ein Profilstreifen (4) eine Stufenbohrung (25) aufweist, welche von dem Gewindebolzen (6) durchsetzt ist, der andernends in eine Gewindebohrung (30) in dem anderen Profilstreifen (5) eingreift.

6. Vorrichtung nach Anspruch 5, dadurch gekennzeichnet, dass die Gewindebohrung (30) zum Führen des Gewindebolzens (6) einen sich öffnenden Führungskanal (31) besitzt.

**Claims**

1. Device for the detachable connection of two profiles (18), rail elements (2) or the like from at least one profile strip (4, 5) with at least one groove (11), characterised in that the groove (11) has an external groove wall (12) with convex curvature and an internal wall (13), the latter being inclined at an angle (w) to a central axis (A) of the profile strip (4, 5).

2. Device according to claim 1, characterised in that the external and internal groove wall (12, 13) are connected to one another via a rounded groove bottom (14).

3. Device according to claim 1 or 2, characterised in that the external groove wail (12) forms, with a flank (7) of the profile strip (4, 5), a wedge-shaped insert (15) of which the tip (17) is rounded.

4. Device according to one of claims 1 to 3, characterised in that two profile strips (4 and 5) are connected to one another via threaded bolts (6) of which the grooves (11) face one another.

5. Device according to claim 4, characterised in that a profile strip (4) has a stepped bore (25) penetrated by the threaded bolt (6) which, at the other end, engages in a threaded bore (30) in the other profile strip (5).

6. Device according to claim 5, characterised in that the threaded bore (30) has an opening guide channel (31) for guidance of the threaded bolt.

**Revendications**

1. Dispositif de raccord détachable de deux profilés (18), éléments de rails (2) ou analogues à partir d'au moins une bande profilée (4,5) ayant au moins une rainure (11), caractérisé en ce que la rainure (11) a une paroi extérieure (12) avec courbure convexe et une paroi intérieure (13), cette dernière se développant avec un angle W d'inclinaison par rapport à un axe médian (A) de la bande profilée (4,5).

2. Dispositif selon la revendication 1, caractérisé en ce que les parois de rainure extérieure et intérieure (12, 13) sont reliées ensemble par un fond de rainure (14) arrondi.

3. Dispositif selon les revendications 1 ou 2, caractérisé en ce que la paroi extérieure de rainure (12) crée avec un flanc (7) de la bande profilée (4, 5) une partie en insertion (15) en forme de coin, dont la pointe (17) est arrondie.

4. Dispositif selon une des revendications 1 à 3, caractérisé en ce que deux bandes profilées (4 et 5) sont assemblées l'une avec l'autre par des boulons filetés (6), et leurs rainures (11) se font face.

5. Dispositif selon la revendication 4, caractérisé en ce qu'une bande profilée (4) comporte un alésage en gradins (25) traversé par un boulon fileté (6), qui à l'autre extrémité engrène dans un alésage fileté (3) de l'autre bande profilée (5).

6. Dispositif selon la revendication 5, caractérisé en ce que l'alésage fileté (30) possède pour le guidage du boulon fileté (6) un canal de guidage (31) s'évasant.

Fig.1

EP 0 471 889 B1

Fig . 2

Fig.3

Fig. 5

Fig. 4

30 · 5 · VII · VII

Fig. 6

31 · 5 · 30

Fig. 7